# EUROPEAN PATENT SPECIFICATION

(11) **EP 2 199 071 B1**
(45) Date of publication and mention of the grant of the patent: **16.05.2012**
(21) Application number: 08829252.9
(22) Date of filing: 26.08.2008
(51) Int. Cl.: B29D 30/60, B29D 30/08

(54) **METHOD AND APPARATUS FOR MANUFACTURING UNVULCANIZED TIRE**
VERFAHREN UND VORRICHTUNG ZUR HERSTELLUNG EINES UNVULKANISIERTEN REIFENS
PROCÉDÉ ET APPAREIL POUR LA FABRICATION D'UN PNEU NON VULCANISÉ

(30) Priority: 05.09.2007 JP 2007230353
(43) Date of publication of application: 23.06.2010
(73) Proprietor: Bridgestone Corporation, Tokyo 104-8340 (JP)
(72) Inventor: OGAWA, Yuichiro, Kodaira-shi Tokyo 187-8531 (JP)
(74) Representative: Oxley, Robin John George
(86) International application number: PCT/JP2008/065171
(87) International publication number: WO 2009/031435

(56) References cited:
- EP-A1- 1 815 971
- WO-A1-01/43957
- WO-A2-2007/088455
- DE-A1-102005 046 116
- JP-A- 2006 312 284
- JP-A- 2006 347 003
- JP-A- 2007 038 471
- US-A1- 2005 077 011

## Description

### TECHNICAL FIELD

The present invention relates to a method and an apparatus for manufacturing unvulcanized tires, wherein a ribbon-like body is supplied to an outer surface of a toroidal support member and helically wound thereon multiple times.

### BACKGROUND ART

This type of method and apparatus for winding a strip member are generally known in the art, as exemplified, for instance, by Patent Document 1.
[Patent Document 1] JP 11-077849A

The apparatus for winding a ribbon-like body as disclosed in Patent Document 1 serves to supply the strip member to an outer surface of a toroidal support member, for helically winding it thereon multiple times, and comprises a first movable table that is movable linearly in one direction, in a first plane including a rotational axis of the support, a first moving means for moving the first movable table in said one direction, a second movable table supported by the first movable table and being movable linearly in a direction perpendicular to said one direction, in a second plane parallel to the first plane, a second moving means for moving the second movable table in the direction perpendicular to said one direction, a turntable rotatable about a vertical rotational axis perpendicular to the first and second planes, a rotating means for rotating the turntable about the vertical rotational axis, and a winding means for winding the a ribbon-like body to the outer surface of the support member, wherein the winding means is supported on the turntable and movable and rotatable with the turntable.

In this instance, the winding means includes an unwinding roll exchangeably mounted on the turntable and formed by winding the ribbon-like body and a liner into a roll shape, an application roller mounted on the turntable so as to be rotatable about a rotational axis that is parallel to the above-mentioned planes, for causing the ribbon-like body supplied from the unwinding roll to be urged against, and wound to the support member, and a liner roll exchangeably mounted on the turntable, for winding the liner that has been separated from the ribbon-like body.

JP 2006 347003 discloses a manufacturing method of time and belt forming apparatus US 2205/007011 discloses an apparatus for fabricating a reinforcement structure for a tyre, comprising a mechanism for turning over the strip.

### DISCLOSURE OF THE INVENTION

### (Task to be Solved by the Invention)

In such conventional method and apparatus for winding the ribbon-like body, as discussed above, the turntable is movable two-dimensionally in the above-mentioned planes and rotatable about the vertical rotational axis, and an unwinding means comprised of the unwinding roll and the winding roll are supported by the turntable. Thus, due to a limitation in the installation space, it is necessary to restrict the unwinding roll to be small in size and, hence, to suppress the winding amount of the ribbon-like strip to the unwinding roll. As a result, there is a problem that the unwinding roll has to be exchanged frequently, thereby lowering the working efficiency. Moreover, because the unwinding roll with a large mass is supported on the turntable, the movement and rotation of the turntable tend to be unstable to degrade the winding accuracy of the ribbon-like body, beside that a large energy is required for the movement and rotation of the turntable.

It is therefore an object of the invention to provide a method and an apparatus for manufacturing unvulcanized tires, capable of winding the ribbon-like body to the support member efficiently and accurately without causing the above-mentioned problems, while achieving an energy-saving.

### (Means for Solving the Task)

For achieving such an object, a first aspect of the invention resides in a method for manufacturing an unvulcanized tire, wherein a ribbon-like body is supplied from a supply source to an outer surface of a toroidal support member, and helically wound thereon multiple times, said method comprising: providing a first rotatable guide roller as being arranged spaced from the support member, moving the first guide roller by a moving means to achieve a parallel movement along the outer surface of the support member in a meridian direction, and turning the first guide roller by a turning means so that a direction, in which a rotational axis of the first guide roller extends, approaches a tangent at the outer surface of the support member, providing a second guide roller as being arranged on a straight line passing the first guide roller and being perpendicular to a plane including a moving trajectory of the first guide roller, said second guide roller having a rotational axis that extends in a width direction of the ribbon-like body supplied from the supply source to the support member, and moving the second guide roller by the moving means so as to achieve a parallel movement integrally with the first guide roller; and, during the parallel movement of the first and second guide rollers, bringing the ribbon-like body supplied from the supply source into contact successively with the second and first guide rollers, before it is supplied to the outer surface of the support member.

A second aspect of the invention resides in a method for manufacturing an unvulcanized tire, wherein a ribbon-like body is supplied from a supply source to an outer surface of a toroidal support member, and helically wound thereon multiple times, said method comprising: providing a first rotatable guide roller as being arranged spaced from the support member, moving the first guide roller by a moving means to achieve a parallel movement along the outer surface of the support member in a meridian direction, and turning the first guide roller by a turning means so that a direction, in which a rotational axis of the first guide roller extends, approaches a tangent at the outer surface of the support member, providing a second guide roller as being arranged on a straight line perpendicular to the rotational axis of the first guide roller, on the side of the first guide roller remote from the support member, said second guide roller having a rotational axis that extends in a width direction of the ribbon-like body supplied from the supply source to the support member, and moving and turning the second guide roller by the moving means and the turning means so as to achieve a parallel movement and a turning movement integrally with the first guide roller; and, during the parallel movement and turning movement of the first and second guide rollers, bringing the ribbon-like body supplied from the supply source into contact successively with the second and first guide rollers, before it is supplied to the outer surface of the support member.

A third aspect of the invention resides in an apparatus for manufacturing an unvulcanized tire, wherein a ribbon-like body is supplied from a supply source to an outer surface of a toroidal support member, and helically wound thereon multiple times, said apparatus comprising: a first rotatable guide roller arranged spaced from the support member; a moving means for moving the first guide roller to achieve a parallel movement along the outer surface of the support member in a meridian direction; a turning means for turning the first guide roller during its parallel movement along the outer surface of the support member, so that a direction, in which a rotational axis of the first guide roller extends, approaches a tangent at the outer surface of the support member; and a second guide roller arranged on a straight line passing the first guide roller and being perpendicular to a plane including a moving trajectory of the first guide roller, said second guide roller having a rotational axis that extends in a width direction of the ribbon-like body supplied from the supply source to the support member, said second guide roller being adapted to be moved by the moving means so as to achieve a parallel movement integrally with the first guide roller; said apparatus being operable so that the ribbon-like body supplied from the supply source is brought into contact successively with the second and first guide rollers, before it is supplied to the outer surface of the support member.

A fourth aspect of the invention resides in an apparatus for manufacturing an unvulcanized tire, wherein a ribbon-like body is supplied from a supply source to an outer surface of a toroidal support member, and helically wound thereon multiple times, said apparatus comprising: a first rotatable guide roller arranged spaced from the support member; a moving means for moving the first guide roller to achieve a parallel movement along the outer surface of the support member in a meridian direction; a turning means for turning the first guide roller during its parallel movement along the outer surface of the support member, so that a direction, in which a rotational axis of the first guide roller extends, approaches a tangent at the outer surface of the support member; and a second guide roller arranged on a straight line perpendicular to the rotational axis of the first guide roller, on the side of the first guide roller remote from the support member, said second guide roller having a rotational axis that extends in a width direction of the ribbon-like body supplied from the supply source to the support member, said second guide roller being adapted to be moved and turned by the moving means and the turning means so as to achieve a parallel movement and a turning movement integrally with the first guide roller; said apparatus being operable so that the ribbon-like body supplied from the supply source is brought into contact successively with the second and first guide rollers, before it is supplied to the outer surface of the support member.

### (Effects of the Invention)

In the invention according to claims 1, 2, 4 and 5, since the ribbon-like body is supplied from a supply source, it is possible to increase the winding amount of the ribbon-like body, thereby allowing a continuous operation for a long time and improving the work efficiency. Furthermore, upon movement of the winding position of the ribbon-like body, it is possible to suppress unintended movement or deformation of a portion of the ribbon-like body while it is being transferred so as to improve the winding accuracy. Moreover, the moving means and the turning means, which are moved during the winding of the ribbon-like body onto the support member, can be made to have a small weight (light weight), the movement or turning can be performed smoothly to further improve the winding accuracy and achieve an energy saving.

In the above-mentioned aspects of the present invention, when the ribbon-like body is wound helically on the outer surface of the support member, the ribbon-like body has to be supplied substantially along a normal line with respect to the support member, although the ribbon-like body supplied from the supply source travels or extends from the supply source toward the support member. Thus, when the first guide roller is put into a parallel movement along the outer surface of the support member in the meridian direction and turned so that its rotational axis extends in a direction that approaches to a tangent with respect to the outer surface of the support member, the feeding direction of the ribbon-like body must be successively changed following the movement of the winding position or the first guide roller.

To this end, in the invention according to claims 1 and 4, there is provided a second guide roller arranged on a straight line passing the first guide roller and being perpendicular to a plane including a moving trajectory of the first guide roller. The second guide roller has a rotational axis that extends in a width direction of the ribbon-like body supplied from the supply source to the support member, and is adapted to be moved by the moving means so as to achieve a parallel movement integrally with the first guide roller, so that the ribbon-like body supplied from the supply source is brought into contact successively with the second and first guide rollers, before it is supplied to the outer surface of the support member. Thus, even if the supplying direction of the ribbon-like body from the supply source toward the support member is gradually changed as explained above, the ribbon-like body stretched between the second and the first guide rollers is twisted following the turning of the first guide roller to absorb the change in the supplying direction, thereby allowing the supplying direction of the ribbon-like body to be readily changed accordingly.

Alternatively, in the invention according to claims 2 and 5, there is provided a second guide roller that arranged on a straight line perpendicular to the rotational axis of the first guide roller, on the side of the first guide roller remote from the support member. The second guide roller has a rotational axis that extends in a width direction of the ribbon-like body supplied from the supply source to the support member, and is to be moved and turned by the moving means and the turning means so as to achieve a parallel movement and a turning movement integrally with the first guide roller, so that the ribbon-like body supplied from the supply source is brought into contact successively with the second and first guide rollers, before it is supplied to the outer surface of the support member. Thus, even if the supplying direction of the ribbon-like body from the supply source toward the support member is gradually changed as explained above, the ribbon-like body stretched between the second and the first guide rollers has a vertical region that achieves a flexural deformation to absorb the change in the supplying direction, thereby allowing the supplying direction of the ribbon-like body to be readily changed accordingly.

Here, upon the helical winding of the ribbon-like body onto the outer surface of the support member, since the first and second guide rollers are driven into a parallel movement along the outer surface of the support member in its meridian direction, the ribbon-like body in contact with the first guide roller is also shifted in the axial direction of the support member following the first guide roller. However, such an axial shifting can be absorbed by a swinging movement of the ribbon-like body between the supply source and the second guide roller, thereby ensuring that the ribbon-like body can be wound onto the outer surface of the support member without any problems.

The arrangement of the present invention according to claim 6 is effective even when the ribbon-like body comprises a weak unvulcanized rubber, since it makes possible to positively suppress deformation of the strip member due to lapse of time or under an external force, and also to facilitate handling when it is supplied from the supply source to the support member. Furthermore, the arrangement of the present invention according to claim 7 serves to effectively suppress an adverse influence of elongation of the ribbon-like body, which occurs when the strip member is twisted between the first and second guide rollers, since the elongation occurs symmetrically with reference to the widthwise center line passing a center region in a thickness direction of the ribbon-like body.

As mentioned above, when the first and second guide rollers are driven into a parallel movement along the outer surface of the support member in its meridian direction, the ribbon-like body in contact with the first guide roller is also shifted in the axial direction of the support member following the first guide roller. However, such an axial shifting can be readily absorbed by the arrangement of the present invention according to claim 7 or 8, by positively suppressing occurrence of abrupt flexure of the ribbon-like body at the outlet of the supply source or at the position of the second guide roller.

Moreover, when the supply source for supplying the ribbon-like body supplied to the outer surface of the support member comprises an unwinding means having an immovable installation position, it is possible to stably preserve the supply amount of the ribbon-like body. It is also possible to readily increase the winding amount of the ribbon-like body on the unwinding means, thereby readily allowing a continuous operation for a prolonged time.

### BRIEF DESCRIPTION OF THE DRAWINGS

Fig. 1 is a schematic perspective view showing a first embodiment of the invention.
Fig. 2 is a front sectional view showing the arrangement in the vicinity of the unwinding means.
Fig. 3 is a front view showing the arrangement in the vicinity of the first and second guide rollers and the moving and turning means.
Fig. 4 is a sectional view taken in the direction of arrow I-I in Fig. 3.
Fig. 5 Fig. 1 is a schematic perspective view showing the operation.
Fig. 6 is a sectional view taken in the direction of arrow II-II in Fig. 4.
Fig. 7 is a schematic perspective view showing a second embodiment of the invention.
Fig. 8 is a schematic perspective view showing a third embodiment of the invention.
Fig. 9 is a schematic perspective view showing a fourth embodiment of the invention.
Fig. 10 is a schematic perspective view showing a fifth embodiment of the invention.
Fig. 11 is a schematic perspective view showing a sixth embodiment of the invention.

### (Reference Numerals)

- 12 ....: Liner
- 13 ...: Ribbon-like body
- 16 ...: Unwinding means
- 19 ...: Guide roller
- 28 ...: Outlet guide roller
- 31 ...: Support member
- 31a ...: Outer surface
- 57 ...: First guide roller
- 60 ...: Moving means
- 64 ...: Turning means
- 71 ...: Second guide roller
- 111 ...: First guide roller
- 112 ...: Second guide roller
- 113 ...: Outlet guide roller

### BEST MODE FOR CARRYING OUT THE INVENTION

### (First Embodiment)

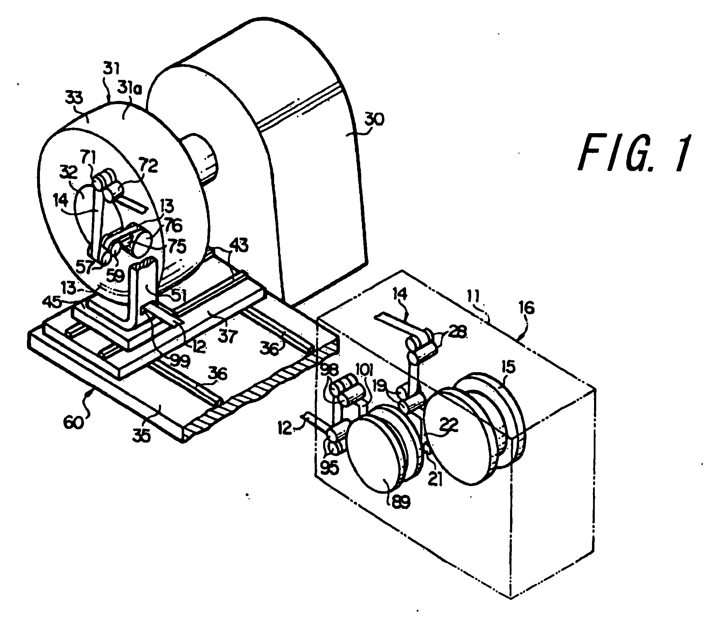

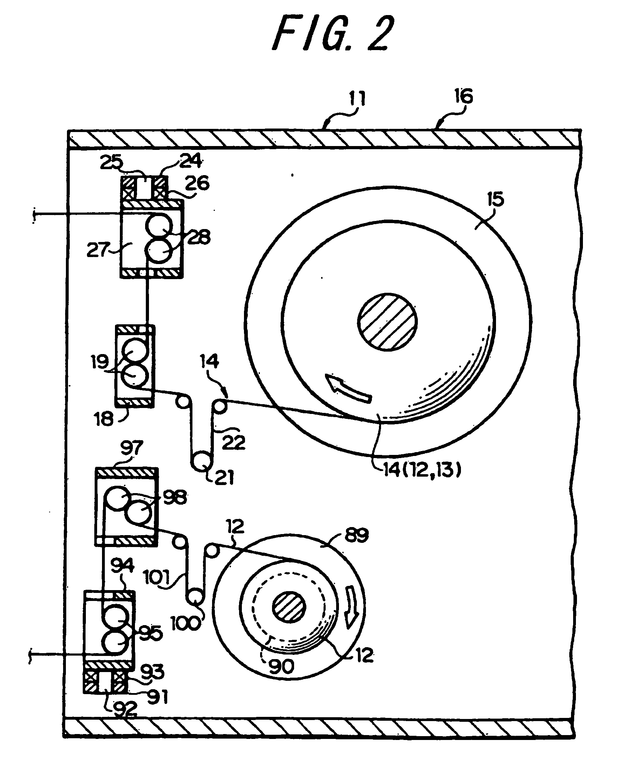

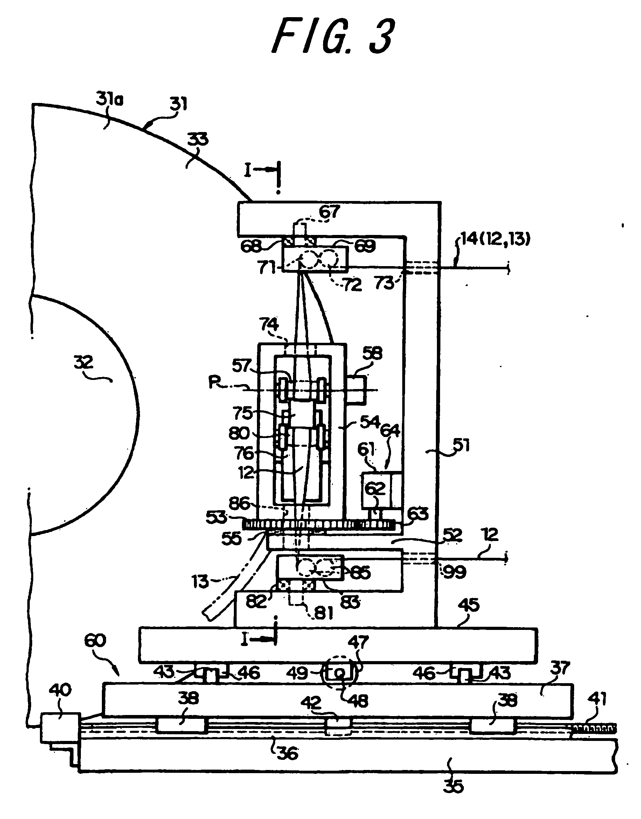

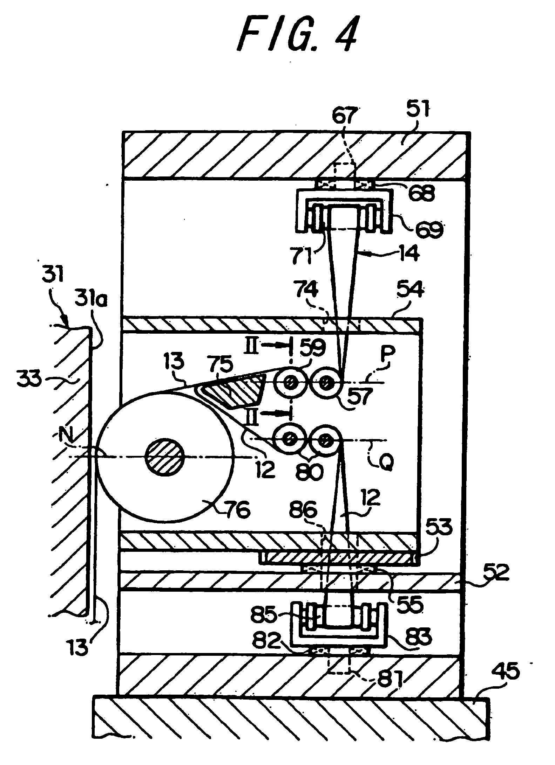

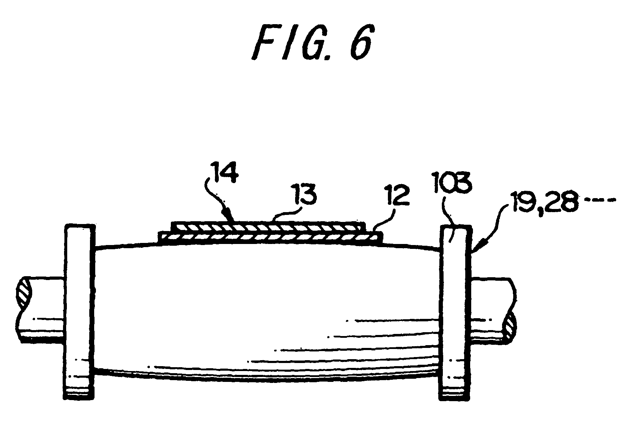

A first embodiment of the present invention will be described below with reference to Figs. 1 to 4, wherein reference numeral 11 denotes a stationary frame fixedly installed on a floor surface. The stationary frame 11 serves to rotatably support a reel 15, on which a narrow strip member 14 (Fig. 6) comprised of a narrow liner 12 and a narrow ribbon-like body 13 laid over the outer surface side of the liner 12 is wound multiple times. Here, the liner 12 is made of a plastic film, such as a polyethylene film, and the ribbon-like body 13 comprises an unvulcanized rubber. Thus, the liner 12 and the ribbon-like body 13 are wound on the reel 15 as being superimposed with, and adhered to each other under a weak adhesion force.

The reel 15 is normally applied with a slight braking torque. Thus, when the narrow strip member 14 is applied with a predetermined tension and the reel 15 is thereby applied with a resultant torque that exceeds the braking torque, the narrow strip member 14 comprised of the liner 12 and the ribbon-like body 13 is successively unwound from the reel 15 as being superimposed with each other. The narrow strip member 14 unwound from the reel 15 is advanced toward the support member 31 to be described hereinafter. The stationary frame 11 and the reel 15, as a whole, constitute a supply source in the form of an unwinding means 16 having an immovable installation position.

A bracket 18 is fixedly secured to the outlet portion of the unwinding means 16 on the front side of the reel 15, i.e. at the front end portion of the stationary frame 11. The bracket 18 serves to rotatably support a pair of guide rollers 19 that are freely rotatable about their respective axes in parallel with the rotational axis of the reek 15. The narrow strip member 14 unwound from the reel 15 is suspended downwards between the guide rollers 19 and the reel 15 by a weight 21 and thereby forms a festoon 22, and then passes between the guide rollers 19 before it is deflected to travel upwards.

Reference numeral 24 denotes a bracket fixedly secured to the stationary frame 11 immediately above the bracket 18. A stationary shaft 25 is fixedly secured to the bracket 24 and extends vertically to support a swinging carrier 27 through a bearing 26, so that the swinging carrier 27 is permitted to swing about the stationary shaft 25 in a horizontal plane. The swinging carrier 27 serves to freely rotatably support a pair of outlet guide rollers 28. Thus, the outlet guide rollers 28 can be swung about the stationary shaft 25 in a horizontal plane, integrally with the swinging carrier 27. The outlet guide rollers 28 are arranged on a straight line that is perpendicular to the rotational axes of the guide rollers 19, and extend in parallel to the guide rollers 19.

When the narrow strip member 14 (ribbon-like body 13), after having contacted with the guide rollers 19, passes between the outlet guide rollers 28 in contact therewith, the narrow strip member 14 is deflected to travel forwards. When the swinging carrier 27 and the outlet guide rollers 28 are caused to swing about the swinging axis, i.e. the center axis of the stationary shaft 25, the ribbon-like body 13 stretched between the guide rollers 19 and the outlet guide rollers 28 is twisted. In this instance, however, since the widthwise center line of the ribbon-like body 13 passing the center in its thickness direction coincides with the swinging axis of the swinging carrier 27 (outlet guide rollers 28), so that the elongation of the ribbon-like body 13 due to the twisting occurs symmetrically with reference to the widthwise center of the ribbon-like body 13, thereby effectively suppressing adverse influences resulting from the elongation, such as undulation, etc.

A driving section 30 is installed on the floor surface in front of the unwinding means 16, to carry a toroidal support member 31 so as to be rotatable about a horizontal axis. Thus, when the support member 31 is driven by the driving section 30, it rotates about a horizontal axis that extends transversely. The support member 31 includes a rigid core 32 having an outer surface of the same shape as the inner surface of a vulcanized tire (product tire), wherein the rigid core 32 is made of segments that can be assembled or disassembled. The support member 31 further includes an intermediate tire body 33 made of a plurality of kinds of tire constitutive members, which are attached to the outer periphery of the rigid core 32. Incidentally, the support member 31 may be alternatively comprised of the rigid core 32 alone, or of a building drum and an intermediate tire body formed on the outer periphery of the building drum and bulged outwards to have a substantially arcuate cross-section, or of the building drum alone.

Reference numeral 35 denotes a base member installed on the floor surface to extend in the fore-and-aft direction, which extends from a position immediately in front of the stationary frame 11 to a position immediately below the support member 31. Pair of horizontal guide rails 36 are mounted on the base member 35 to extend in the fore-and-aft direction, i.e., the direction in which extends the narrow strip member 14 unwound from the unwinding means 16. Reference numeral 37 denotes a lower plate in the form of a horizontal rectangular plate arranged immediately above the base member 35 and having a length in the transverse direction, which is larger than the width of the support member 31. A plurality of sliding bearings 38 are secured to the lower surface of the lower plate 37, and brought into sliding engagement with the guide rails 36.

Reference numeral 40 denotes a motor mounted on the base member 35, having an output shaft that is connected to a screw rod 41. The screw rod 41 is threadedly engaged into a screw block 42 that is secured to the lower surface of the lower plate 37. Thus, when the motor 40 is operated and the screw rod 41 is thereby rotated, the lower plate 37 is moved in the fore-and-aft direction within a horizontal plane, while being guided by the guide rails 36. Reference humeral 43 denotes pair of horizontal guide rails, which are mounted on the upper surface of the lower plate 37 to extend within a horizontal plane in the transverse direction perpendicular to the fore-and-aft direction.

Reference numeral 45 denotes an upper plate in the form of a horizontal rectangular plate arranged immediately above the lower plate 37 and having a length in the transverse direction, which substantially same as the width of the support member 31. A plurality of sliding bearings 46 are secured to the lower surface of the upper plate 45, and brought into sliding engagement with the guide rails 43. Reference numeral 47 denotes a motor mounted on the lower plate 37, having an output shaft that is connected to a screw rod 48. The screw rod 48 is threadedly engaged into a screw block 49 that is secured to the lower surface of the upper plate 45. Thus, when the motor 47 is operated and the screw rod 48 is thereby rotated, the upper plate 45 is moved in the transverse direction perpendicular to the fore-and-aft direction within a horizontal plane, while being guided by the guide rails 43.

The upper plate 45 has an upper surface to which a substantially U-shaped support frame 51 is fixedly secured to open on the rear side. The support frame 51 has a lower part formed integrally with a support plate 52, which extends horizontally rearwards. A box-like turntable 54 is mounted immediately above the support plate 52, and has open ends at both sides, and a lower surface to which a large diameter external gear wheel 53 is fixedly secured. A bearing 55 is interposed between the external gear wheel 53 and the support plate 52, which serves to support the turntable 54 so as to be rotatable about a vertical turning axis.

Reference numeral 57 denotes a first guide roller arranged spaced from the outer surface 31a of the support member 31 and rotatably supported by the turntable 54. The first guide roller 57 has a rotational axis arranged in a plane P parallel to a horizontal axial plane N that includes the rotational axis of the support member 31, e.g. in a horizontal plane slightly above the axial plane N as in the illustrated embodiment. Thus, the turning axis of the turntable 54 extends perpendicularly with respect to the plane P.

A motor 58 is mounted on the turntable 54 for driving the first guide roller 57 into rotation. Reference numeral 59 denotes a counterpart guide roller forming a pair with the first guide roller 57. The counterpart guide roller 59 is arranged adjacent to the first guide roller 57, at a position closer to the support member 31 than the first guide roller 57. The first guide roller 57 can be driven into a parallel movement along the outer surface 31a of the support member 31 in the meridian direction within the plane P, as the motors 40, 47 are operated and the lower and upper plates 37, 45 are moved in the for-and-aft direction and the transverse direction.

The above-mentioned guide rails 36, lower plate 37, sliding bearings 38, motor 40, screw rod 41, screw block 42, guide rails 43, upper plate 45, sliding bearings 46, motor 47, screw rod 48, screw block 49 and support frame 51, as a whole, constitute a moving means for placing the first guide roller 57 into a parallel movement along the outer surface 31 a of the support member 31 in the meridian direction.

Reference numeral 61 denotes a motor fixedly secured to the support frame 51, and having an output shaft 62 to which an external gear wheel 63 is fixedly secured, wherein the external gear wheel 63 is meshed with the external gear wheel 53. During the parallel movement of the first guide roller 57 along the outer surface 31a of the support member 31 in the meridian direction, when the motor 61 is operated, the turntable 54 is integrally turned about the turning axis. On this occasion, the first guide roller 57 is turned integrally with the turntable 54 so that the direction, in which the rotational axis of the first guide roller 57 extends, approaches a tangent relative to the outer surface 31a of the support member 31, e.g. a tangent in the meridian direction relative to the outer surface 31a as in the illustrated embodiment.

The above-mentioned external gear wheel 53, turntable 54, bearing 55, motor 61 and external gear wheel 63, as a whole, constitute a turning means for turning the first guide roller while it is driven into a parallel movement along the outer surface 31a of the support member 31 in the meridian direction, so that the direction, in which the rotational axis of the first guide roller 57 extends, approaches a tangent relative to the outer surface 31 a of the support member 31. Reference numeral 67 denotes a stationary shaft fixedly secured to the support frame 51 immediately above the first guide roller 57, to extend in the vertical direction. The stationary shaft 67 serves to carry a swinging carrier 69 through a bearing that is coaxial to the bearing 55, so that the swinging carrier 69 is permitted to swing in a horizontal plane about the stationary shaft 67.

Reference numeral 71 denotes a second guide roller that is freely rotatably supported on the swinging carrier 69. The second guide roller can be driven by the moving means into a parallel movement integrally with the first guide roller 57. The second guide roller 71 is arranged on a straight line, which is perpendicular to a plane including the moving trajectory of the first guide roller 57, i.e. the above-mentioned plane P, and which passes the first guide roller 57, at a position spaced upwards from the first guide roller 57 by a distance of about 100 mm. Thus, although the second guide roller 71 is not turned about the turning axis together with the first guide roller 57, the second guide roller 71 is driven into a parallel movement integrally with the first guide roller 57 by the moving means 60. Since the bearings 55 and 68 are coaxial with each other, the turning axis of the first guide roller 57 and the swinging axis of the second guide roller 67 are coaxial with each other.

The narrow strip member 13 (the ribbon-like body 14), after it has been unwound from the unwinding means 16 to extend toward the support member 31, is brought into contact with the second guide roller 71. The second guide roller 71 has a rotational axis that extends parallel to the width direction of the narrow strip member 13 (the ribbon-like body 14) at a position where the narrow strip member 13 (the ribbon-like body 14) is brought into contact with the second guide roller 71. Thus, the rotational axis of the second guide roller 71 is horizontal and substantially parallel to the rotational axis of the support member 31.

Reference numeral 72 denotes a counterpart guide roller arranged at a position adjacent to the second guide roller 71 and closer to the unwinding means 16 than the second guide roller 71. When the motor 58 is operated and the narrow strip member 14 (ribbon-like body 13) is hauled by the first guide roller 57, the narrow strip member 14 is brought into contact with the guide roller 19 and deflected to travel upwards, before it is brought into contact with the outlet guide roller 28 and deflected to travel forwards, i.e. toward the support member 31.

Subsequently, the narrow strip member 14 travels through an open space and passes through a slit 73 formed in the support frame 51, and is then brought into contact successively with the counter guide roller and the second guide roller 71 and deflected by the second guide roller 71 to travel downwards, before it passes through a through-hole 74 formed in the upper end of the turntable 54 and comes into contact with the first guide roller 57 so as to be deflected once again to travel toward the support body 31.

Reference numeral 75 denotes a separator secured to the turntable and arranged closer to the support member 31 than the counterpart guide roller. The separator 75 serves to separate the narrow strip member 14, after it has been brought into contact successively with the first guide roller 57 and the counterpart guide roller 59, and immediately before it is wound onto the support member 31, into the ribbon-like body 13 and the liner 12. Reference numeral 76 denotes an application roller freely rotatably supported by the turntable 54 at a position closer to the support member 31 than the separator 75. The application roller 76 is larger in diameter than the first guide roller 57, and has a rotational axis arranged in the horizontal axial plane N that includes the rotational axis of the support member 31, in parallel with the rotational axis of the first guide roller 57. The application roller 76 partly projects from the turntable 54 toward the support member 31.

The ribbon-like body 13 separated from the liner 12 by the separator 75 is continuously supplied to the outer periphery of the application roller 76. The outer surface 31a of the support member 31, with which the application roller 76 is in rolling contact, has a peripheral speed that is adjusted to be the same as the supplying speed of the narrow strip member 14 (ribbon-like body 13) to the support member 31. Thus, the ribbon-like body 13 is urged against the outer surface 31 a of the support member 31 by the application roller 76, and thereby highly accurately wound without causing elongation or shrinkage in the circumferential direction.

The ribbon-like body 13 is in contact with the outer periphery of the application roller by one-quarter turn and thus changes the direction by 90°, before it is supplied to the support member 31. By this, as compared to the case where the ribbon-like body 13 is supplied by passing though an open space, it is possible to provide improved accuracy of supplying and winding the ribbon-like body 13. Incidentally, at the leading end of the narrow strip member 14 as it is unwound, one of the ribbon-like body 13 and the liner 12 projects slightly in the longitudinal direction than the other, so as to facilitate separation of these elements from each other at the beginning of the winding onto the support member 31, and also to allow the winding to be automatically started.

In this way, the ribbon-like body 13 is stored as being superimposed with the liner 12 and wound on the unwinding means 16, the ribbon-like body 13 and the liner in their superimposed state are unwound from the unwinding means 16 and supplied toward the support member 31, the ribbon-like body 13 is separated form the liner 12 by the separator 75 immediately before it is wound onto the support member 31, and the separated ribbon-like body 13 alone is wound onto the support member 31. Thus, even when the ribbon-like body 13 is comprised of a soft and weak unvulcanized rubber, it is possible to positively suppress deformation due to a lapse of time or an external force, and to facilitate handling of the ribbon-like body 13 as it is supplied from the unwinding means 16 to the support member 31.

When the ribbon-like body 13 is wound onto the outer surface 31 a of the support member 31 in the manner described above, the moving means 60 is operated to cause an integral parallel movement of the turntable 54, first guide roller 57, the second guide roller 71 and the application roller 76 along the outer surface 31 a of the support member 31 in the meridian direction, while the turning means 64 is operated to cause an integral turning movement of the first guide roller 57 and the application roller 76 about the turning axis to approach a tangent relative to the outer surface 31 a. By this, the ribbon-like body is helically wound multiple times by the application roller 75, which is moved in the meridian direction within a horizontal plane (axial plane N) that includes the rotational axis of the support member 31, so as to extend from one sidewall portion to the other sidewall portion across the tread portion.

As a result, a pair of side treads and a top tread are formed on the outer side of the outer surface 31a of the support member 31. Here, the ribbon-like body may be comprised of a rubber strip embedding therein a small number of reinforcing cords to extend in the longitudinal direction. In this instance, the ribbon-like body 13 may be helically wound multiple times at the bead portion to form a beads core, and/or at the tread portion to form a belt reinforcing layer for reinforcing the belt layers.

It is to be noted that, although the narrow strip member 14 (ribbon-like body 13) unwound from the unwinding means 16 is forwards, i.e. toward the support member 31 as described above, it is necessary for the ribbon-like body 13 to be supplied substantially along a normal line with respect to the support member 31. Thus, when the first and second guide rollers 57, 71 and the application roller 76 are situated on the left side of the support member 31, the ribbon-like body 13 from the first guide roller 57 must be supplied from the left side toward the right side. When the first and second guide rollers 57, 71 and the application roller 76 are situated on the rear side of the support member 31, the ribbon-like body 13 must be supplied from the rear side to the front side. Further, when the first and second guide rollers 57, 71 and the application roller 76 are situated on the right side of the support member 31, the ribbon-like body 13 must be supplied from the right side toward the left side.

To this end, according to the first embodiment of the present invention, the first and second guide rollers 57, 71 are arranged to satisfy the above-mentioned particular spatial relationship relative to each other, an integral parallel movement of the first and second guide rollers 57, 71 is caused in the meridian direction along the outer surface 31 a of the support member 31, and a turning movement of the first guide roller 57 is caused about the turning axis, so that the ribbon-like body 13 stretched between the second guide roller 71 and the first guide roller 57 is twisted following the movement in the meridian direction.

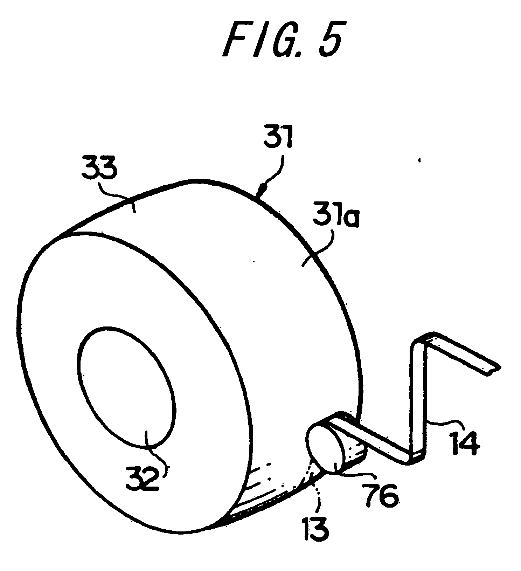

As a result, even when the supply direction of the ribbon-like body 13 changes continuously due to the parallel movement of the first and second guide rollers 57, 71 and the application roller 75, in combination with the turning movement of the first guide roller 57 and the application roller 75, such a change can be readily absorbed. Incidentally, the ribbon-like body 13 is not twisted and assumes a flat shape only when the first guide roller 57 and the application roller 75 are opposed to the widthwise center region of the support member 31, as shown in Fig. 5. The twisting degree of the ribbon-like body 13 gradually increases as it is moved from the widthwise center region of the support member 31, toward both sides in the meridian direction.

In the first embodiment of the present invention, the ribbon-like body 13 stretched between the first and second guide rollers 57, 71 has a widthwise center line which passes the center region in the thickness direction, and extends in a direction perpendicular to the plane P, coinciding with the turning axis as mentioned above. Thus, the elongation of the ribbon-like body 13 due to the twisting between the first and second guide rollers 57, 71 occurs symmetrically with reference to the widthwise center of the ribbon-like body 13, to effectively suppress adverse influences due to the elongation, such as undulation of the narrow strip member 14 (ribbon-like body 13).

Also, when the first and second guide rollers 57, 71 are driven into a parallel movement in the meridian direction along the outer surface 31a of the support member 31 as explained above, the narrow strip member 14 (ribbon-like body 13) in contact with the first and second guide rollers 57, 71 follows these guide rollers and is thereby shifted in the axial direction of the support member 31. However, such an axial shifting can be absorbed by allowing an oscillation of the narrow strip member 14 (ribbon-like body 13) between the unwinding means 16 and the second guide roller 71, in order to ensure that the ribbon-like body 13 can be accurately wound onto the outer surface 31a of the support member 31.

Nevertheless, when the ribbon-like body 13 is oscillated by a large angle, it might be desirable to avoid any abrupt flexure of the ribbon-like body 13 at the outlet guide roller 28 and the first guide roller 57. To this end, in the first embodiment of the present invention, the guide roller 19 and the outlet guide roller 28 are provided at the outlet of the unwinding means 16, and the outlet guide roller 28 and the second guide roller 71 are designed to achieve a swinging movement under the tension of the narrow strip member 14 (ribbon-like body 13) stretched between the outlet roller 28 and the second guide roller 71, so as to maintain these guide rollers in parallel with each other.

The above-mentioned swinging movement of the outlet guide roller 28 and the second guide roller 71 allows twisting of the narrow strip member 14 (ribbon-like body 13) between the guide roller and the outlet guide roller 28, and also between the first and second guide rollers 57, 71, thereby positively avoiding abrupt flexure of the narrow strip member 14 (ribbon-like body 13). In this instance, the outlet roller 28 and the second guide roller 71 may be designed so that their swinging movement occurs within a horizontal plane, or within the same plane that includes the rotational axes of these rollers.

Furthermore, when the first and second guide rollers 57, 71 are driven into a parallel movement in the meridian direction along the outer surface 31a of the support member 31, in the manner described above, the first and second guide rollers 57, 71 are moved back and forth in the fore-and-aft direction so that the narrow strip member 14 (ribbon-like body 13) is pushed back or pulled in the longitudinal direction between the unwinding means 16 and the second guide roller 71. Such movement in the fore-and-aft direction can he absorbed by changing the suspension length of the festoon 22, thereby ensuring that the tension of the narrow strip member 14 (ribbon-like body 13) and the unwinding speed from the reel 15 are maintained substantially constant.

Here, since the installation position of the unwinding means 16 for unwinding the narrow strip member 14 (ribbon-like body 13) is immovable, it is possible to readily increase the winding amount of the narrow strip member 14 (ribbon-like body 13) on the unwinding means 16, thereby readily allowing a continuous operation for a prolonged time. In particular, since the installation position of the unwinding means 16 with a large mass (heavy weight) is immovable, the moving means 60 and the turning means 64, which are moved upon winding of the narrow strip member 14 (ribbon-like body 13) onto the support member 31, can be designed to have a small mass (light weight) as a whole, thereby allowing a smooth turning and improved winding accuracy, while at the same time achieving an energy saving.

Reference numeral 80 denotes a pair of first return rollers freely rotatably supported by the turntable 54 in parallel with the first guide roller, at a position immediately below the first guide roller 54 and the counterpart guide roller 59. These first return rollers 80 can be moved and turned integrally with the first guide roller 57. When the liner 12 is separated from the ribbon-like body 13 and brought into contact with the first return rollers 80, the liner 12 is deflected to travel downwards. Reference numeral 81 denotes a stationary shaft fixedly secured to the support frame 51 immediately below the first return rollers 80, to extend coaxially with the above-mentioned stationary shaft 67. The stationary shaft 81 serves to carry a swinging carrier 83 through a bearing 82 that is coaxial to the bearing 55, so that the swinging carrier 83 is allowed to achieve a swinging movement in a horizontal plane about the stationary shaft 81.

Reference numeral 85 denotes a pair of second return rollers freely rotatably supported by the swinging carrier 83 and extending in parallel with the second guide rollers. The second return rollers 85 are not turned together with the first return rollers 80, but they can be driven into a parallel movement integrally with the first return rollers 80. The second return rollers 85 are arranged on a straight line, which is perpendicular to a plane Q including the moving trajectory of the first return rollers 80, and which passes the first return rollers 80. Since the bearings 55 is coaxial to the bearing 82, as mentioned above, the turning axis of the first return rollers 80 is coaxial to the swinging axis of the second return rollers 85. The liner 12 which has been deflected by the first return rollers 80 passes through a through-hole 86 formed in the turntable 54, the external gear wheel 53, the bearing 55 and the support plate 52, before the liner 12 is brought into contact with the second return rollers 85, where it is deflected to travel rearwards.

Here, when the turntable 54 and the first return rollers 80 are turned about the turning axis, the liner 12 stretched between the first return rollers 80 and the second return rollers 85 is twisted, as discussed above with reference to the narrow strip member 14. However, the widthwise center line of the liner 12, which passes the center region in the thickness direction, extends in a direction perpendicular to the plane Q including the moving trajectory of the first return rollers 80, and coincides with the turning axis as mentioned above. Thus, the elongation of the liner 12 due to the twisting between the first and second return rollers 80, 85 occurs symmetrically with reference to the widthwise center of the liner 12, to effectively suppress adverse influences due to the elongation.

Reference numeral 89 denotes a winding reel for winding the liner 12, which has been separated form the ribbon-like body 13. The winding reel 89 is supported by the stationary frame 11 at a position lower than the reel 15. The winding reel 89 can be rotated by a driving force from a drive motor 90 in a winding direction. A bracket 91 is fixedly secured at the forward end region of the stationary frame 11 in front of the winding reel 89. A stationary shaft 92 is fixedly secured to the bracket 91 and extends in the vertical direction. The stationary shaft 92 serves to carry a rocker member 94 through a bearing 93, so that the swinging carrier 94 can be caused to achieve a swinging movement in a horizontal plane about the stationary shaft 92. Guide rollers 95 forming a pair are rotatably supported by the rocker member 94, so that these guide rollers 95 can be driven into a rocking movement integrally with the rocker member 94, in the horizontal plane about the stationary shaft 92.

A bracket 97 is fixedly secured to the stationary frame 11 at a position above the swinging carrier 94. Guide rollers 98 forming a pair are supported by the bracket 97 so as to be freely rotatable about the respective axes, which are in parallel with the rotational axis of the winding reel 89. It is noted that the guide rollers 95 are arranged on a straight line that is perpendicular to the rotational axes of the guide rollers 98, and extend in parallel with the guide rollers 98.

The liner 12 on its return path, which has been deflected by the second return roller 85 to travel backwards, passes through a slit 99 formed in the support frame 51, and is brought into contact with the guide roller 95 and thereby deflected to travel upwards, and is then brought into contact with the guide roller 98 and thereby deflected to travel backwards, i.e. toward the winding reel 89, before it is wound onto the reel 89 and thereby recovered.

Here, the liner 12 is suspended downwards by a weight 100 to form a festoon 101 between the guide roller 98 and the winding reel 89. This festoon 101 has a suspension length which changes as the first and second return rollers 80, 85 are moved back and forth in the fore-and-aft direction, to absorb the movement in the fore-and-aft direction and thereby maintain the tension of the liner 12 constant.

When the swinging carrier 94 and the guide rollers 95 are caused to achieve a swinging movement about the swinging axis (stationary shaft 25), the liner 12 stretched between the guide rollers 95, 98 is twisted. However, the widthwise center line of the liner 12, which passes the center region in the thickness direction, coincides with the swinging axis of the swinging carrier 94, so that the elongation of the liner 12 due to the twisting occurs symmetrically with reference to the widthwise center, to effectively suppress adverse influences due to the elongation.

Since the stationary frame 11 is provided with the guide rollers 95, 98, and the guide rollers 95 and the second return rollers 85 can be caused to achieve a swinging movement, the guide roller 95 and the second return rollers 85 are placed into a swinging movement and thereby maintained in parallel with each other under the tension of the liner 12 stretched therebetween. On such occasion, the swinging movement of these rollers is absorbed by the twisting deformation of the liner 12 stretched between the first and second return rollers 80, 85 and also between the guide rollers 95, 98.

When the guide roller 95 and the second return rollers 85 are placed into a swinging movement and maintained in parallel with each other in the manner described above, even if the liner 12 in contact with the second return rollers 85 is moved in the axial direction of the support member 31, such a movement can be readily absorbed so as to positively prevent occurrence of abrupt flexure of the liner 12 at the position of the second return roller 85 and the guide roller 98 in the width direction.

It is noted that, for each of the guide rollers 19, the outlet guide rollers 28, the first and second return rollers 80, 85 and the guide rollers 95, 98, there are provided two rollers in pair, and that the first guide rollers 57 and the counter guide rollers 59, as well as the second guide rollers 71 and the counterpart guide rollers 72 are also each provided in pair. As a result, the narrow strip member 14 (ribbon-like body 13) in contact with these rollers can be positively restrained, to effectively suppress dislocation due to disturbance.

It is further noted that the guide rollers 19, the outlet guide rollers 28, the first guide rollers 57 and the counter guide rollers 59, the second guide rollers 71 and the counterpart guide rollers 72, the first and second return rollers 80, 85 and the guide rollers 95, 98 are each provided, as shown in Fig. 6, with disengagement preventing flanges 103 on both axial ends, and has an outer diameter that increases toward the axial center to form a crowned shape, so that a force is imparted to the narrow strip member 14 or the liner 12 in contact with these rollers, to urge them toward the axial center of the respective rollers.

The operation and function of the first embodiment will be described below. It is assumed that the support member 31, the first guide roller 57 and the winding reel 89 are driven for rotation about their respective axes by the driving section 30, the drive motor 58 and the drive motor 90, respectively, and the application roller 76 is in a rolling contact with the outer surface 31 a of the support member 31, which is perpendicular to the plane N, e.g. with the outer surface at one sidewall portion.

In this instance, since the narrow strip member 14 is hauled by the rotation of the first guide roller 57, the narrow strip member 14 (ribbon-like body 13) unwound from the reel 15 travels toward the support member 31 while being successively brought into contact with the guide roller 19, the outlet guide roller 28, the counterpart guide roller 72, the second guide roller, the first guide roller 57, the counterpart guide roller 59 in this sequence. Subsequently, immediately before the winding, the narrow strip member 14 is separated by the separator 75 into the ribbon-like body 13 and the liner 12, of which the ribbon-like body 13 is supplied to, and urged against the outer surface 31a of the support member 31, and is helically wound about the support member 31 in the circumferential direction.

On this occasion, the moving means 60 drives the first and second guide rollers 57, 71, the application roller 76, etc., into a parallel movement in the meridian direction along the outer surface 31 a of the support member 31, while the turning means 64 drives the first guide roller 57 into a turning movement integrally with the application roller 76 so that the direction of its rotational axis approaches a tangent relative to the outer surface 31a of the support member 31, with the result that the ribbon-like body 13 is helically wound about the support member 31 (tire intermediate body 33) multiple times from one sidewall portion to the other sidewall portion across the tread portion, at a winding position on an intersection line between the outer surface 31a and a horizontal plane including the rotational axis of the support member 31.

As noted above, when the ribbon-like body 13 is wound helically on the outer surface of the support member 31, the ribbon-like body 13 has to be supplied from the first guide roller 57 to the support member 31 substantially along a normal line with respect to the outer surface 31a, although the narrow strip member 14 (ribbon-like body 13) supplied from the supply source 16 travels or extends from the supply source toward the support member. Thus, it is necessary to successively change the supply direction (traveling direction) in accordance with the winding position, i.e. the parallel movement and turning movement of the first guide roller 57.

To this end, according to the first embodiment of the present invention, the second guide roller 71 is arranged on a straight line passing the first guide roller and being perpendicular to a plane including a moving trajectory of the first guide roller 57, wherein the second guide roller 71 has a rotational axis that extends in a width direction of the ribbon-like body 13 supplied toward the support member 31, and the second guide roller 71 is driven by the moving means 60 so as to achieve a parallel movement integrally with the first guide roller 57, in order to bring the ribbon-like body 13 into contact successively with the second and first guide rollers 71, 57 in this sequence.

As a result, even if the supplying direction of the ribbon-like body 13 from the first guide roller 57 is gradually changed as explained above, the ribbon-like body 13 stretched between the second and the first guide rollers 57, 71 is twisted following the parallel movement and the turning movement of the first guide roller 57 to absorb the change in the supplying direction, thereby suppressing dislocation, twisting or unnecessary elongation of the ribbon-like body 13 upon its winding.

The liner 12 separated from the ribbon-like body 13 is successively brought into contact with the first and second return rollers 80, 85 and the guide rollers 95, 98, before it is wound by the winding reel 89 and thereby collected. On this occasion, although the liner immediately after the separation by the separator 75 travels substantially along a normal line relative to the outer surface 31a of the support member 31, the liner 12 after its contact with the second return roller 85 travels backwards, i.e. toward the winding reel 89. Thus, it is necessary to successively change the supply direction (traveling direction) to follow the winding position, i.e. the parallel movement and turning movement of the first guide roller 57, as in the case of the ribbon-like body 13. It is for this reason that the first and second return rollers 80, 85 are arranged in the manner described above, so as to ensure that the liner 12 stretched between the first and second return rollers 80, 85 is subjected to a twisting deformation following the parallel movement and the turning movement of the first guide roller 57.

Furthermore, since the support frame 51 is driven into a parallel movement along the meridian direction of the support member 31, in the manner described above, the narrow strip member 14 (ribbon-like body 13) and the liner 12 are moved on the axial direction together with the second guide roller 71 and the second return roller 85, so that the narrow strip member 14 and the liner 12 are oscillated about the outlet guide roller 28, the second guide roller 71 and the guide roller 95, and the second return roller 95.

However, due to an arrangement wherein the outlet guide roller 28, the second guide roller 71 and the guide roller 95, and the second return roller 95 can be caused to achieve a swinging movement, and wherein the outlet guide roller 28, the second guide roller 71 and the guide roller 95, and the second return roller 95 are placed in a swinging movement and maintained in parallel with each other under the tension of the narrow strip member 14 (ribbon-like body 13) and the liner 12, the narrow strip member 14 (ribbon-like body 13) and the liner 12 are subjected to a twisting deformation between the guide roller 19 and the outlet guide roller 28, between the first and second guide rollers 57, 71, between the first and second return rollers 80, 85 and between the guide rollers 95, 98, the narrow strip member 14 and the liner 12 at the swinging center positions are positively prevented from abrupt flexure in the width direction.

Moreover, when the first and second guide rollers 57,71 and the first and second return rollers 80, 85 are driven into a parallel movement in the meridian direction along the outer surface 31a of the support member 31, these rollers are moved in the fore-and-aft direction so that the narrow strip member 14 (ribbon-like body 13) and the liner 12 are puller or pushed back in the longitudinal direction between the reel 15, winding reel 89 and second guide roller 71, and the second return roller 85. However, such a movement of the rollers in the fore-and-aft direction is absorbed by the change of the suspended length of the festoons 22, 101, so that the tension of the narrow strip member 14 (ribbon-like body 13) and the liner 12 can be maintained substantially constant, and also the unwinding speed from the reel 15 and the winding speed of the winding reel 89 can be maintained substantially constant.

When the ribbon-like body 13 is helically wound onto the outer surface 31 a of the support member 31 a predetermined number of times to form the side treads and the top tread, the support member 31, the first guide roller 57 and the winding reel 89 are stopped from rotation and the moving means 60 and the turning means 64 are stopped from operation. The ribbon-like body 13 stretched between the application roller 76 and the support member 31 is cut by a cutter (not shown), to produce an unvulcanized tire.

### (Second Embodiment)

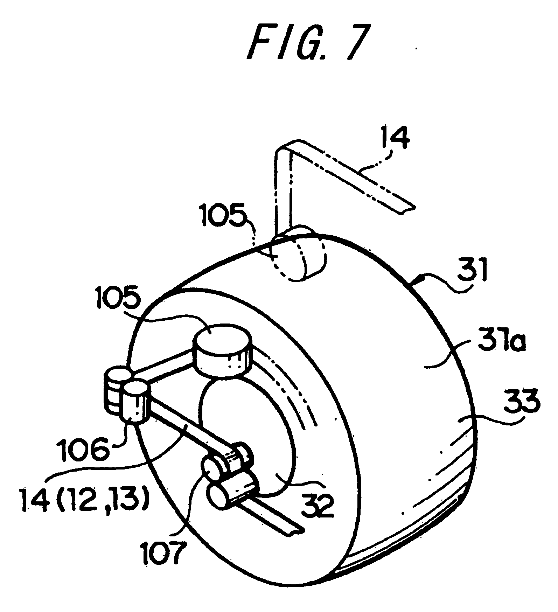

A second embodiment of the present invention is shown in Fig. 7, which is essentially same as the first embodiment described above, except that the rotational axis of the application roller 105 is arranged on a vertical plane (axial plane) that includes the rotational axis of the support body 31, and the rotational axis of the first guide roller 106 is arranged on a plane that is parallel to this vertical plane. Thus, the application roller 105, the first guide roller 106, the second guide roller 107, etc., are moved by the moving means two-dimensionally in these vertical planes, and driven into a parallel movement in the meridian direction along the outer surface 31a of the support member 31. To this end, it is necessary for the moving means to be able move the first guide roller 106, etc., at least on the left-to-right direction and vertical directions. Also, it is usually necessary for the moving means to be able to move the first guide roller 106, etc., in the fore-and-aft direction in order to allow loading or unloading of the support member 31.

Due to such an arrangement of the second embodiment, the ribbon-like body 13 is helically wound by the application roller 105 onto the support member 31 multiple times, at the intersection line between the outer surface 31a and the vertical plane that includes the rotational axis of the support member 31. In the second embodiment, the second guide roller 107 is turned about the turning axis by the turning means, which is a horizontal axis extending in the fore-and-aft direction. Since the second guide roller 106 is arranged on a straight line that is perpendicular to the vertical plane, the second guide roller 106 is arranged on the rear side of the first guide roller 106, i.e. on the side of the unwinding means 16. Although not shown in the drawings, the first and second return rollers 80, 85 are arranged to have the similar spatial relationship as the first and second guide rollers 106, 107 of the second embodiment.

### (Third Embodiment)

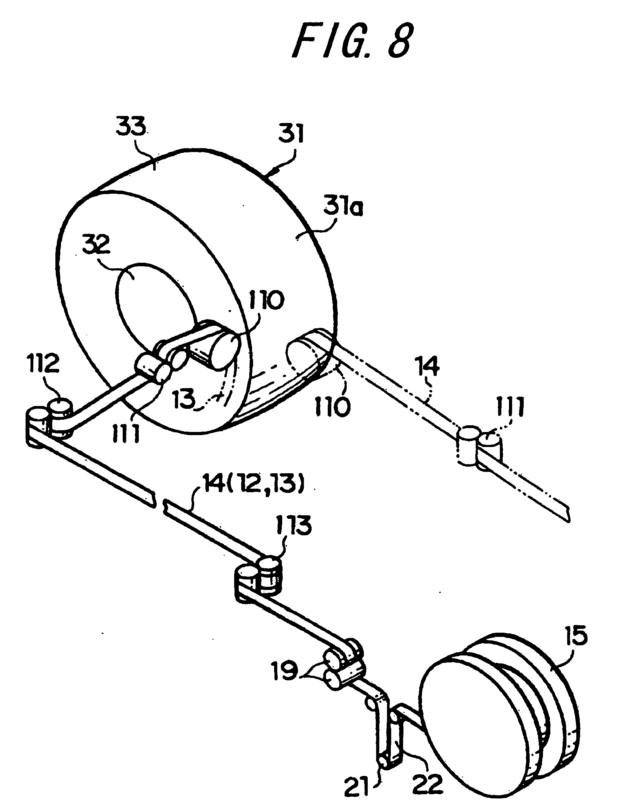

A third embodiment of the present invention is shown in Fig. 8. In the third embodiment, the rotational axis of the application roller 110 is arranged on a horizontal plane (axial plane) that includes the rotational axis of the support member 31, and the rotational axis of the first guide roller 111 is arranged in a plane that is parallel to this horizontal plane, as in the first embodiment. However, the second guide roller 112 is arranged on a straight line perpendicular to the rotational axis of the first guide roller 111, on the side of the first guide roller 111 remote from the support member 31, so that the rotational axis of the second guide roller 112 extends normally in the vertical direction.

With such an arrangement of the third embodiment, the application roller 110 and the first and second guide rollers 111, 112 are moved by the moving means two-dimensionally along the horizontal plane so that these rollers achieve a parallel movement in the meridian direction along the outer surface 31a of the support member 31, while the application roller 110 and the first and second guide rollers 111,112 are integrally turned by the turning means about a vertical turning axis that is perpendicular to the horizontal plane, so that he ribbon-like body 13 is helically wound by the application roller 105 onto the support member 31 multiple times, at the intersection line between the outer surface 31a and the horizontal plane that includes the rotational axis of the support member 31. In order to cause the second guide roller 112 to be turned by the turning means integrally with the first guide roller 111, the second roller 112 can be rotatably supported by the turntable 54.

In the third embodiment, furthermore, the outlet guide roller 113 is rotatably supported at the outlet portion of the unwinding means 16, more particularly on the stationary frame 11 at a position closer to the support member 31 than the guide roller 19, having a rotational axis that extends in parallel with the second guide roller 112, i.e., in the vertical direction. The narrow strip member 14 (ribbon-like body 13) is brought into contact with the outlet guide roller 113 and travels so that the narrow strip member 14 (ribbon-like body 13) stretched between the second guide roller 112 and the outlet guide roller 113 assumes an upright posture over the entire length, with its front and back surfaces extending substantially in the vertical direction.

As a result, even if the winding position relative to the support member 31 moves in the meridian direction and the supplying direction of the ribbon-like body 13 gradually changes so that the ribbon-like body 13 is shifted in the axial direction of the support member 31, such an axial shifting can be absorbed by causing the narrow strip member 14 (ribbon-like body 13) stretched between the second guide roller 112 and the outlet guide roller 113 to achieve flexural deformation, i.e. a swinging movement about the second guide roller 112 and the outlet guide roller 113, without any noticeable problems. Incidentally, the rollers for guiding the liner 12 on its return path are arranged in a similar manner as the first and second guide rollers 111, 112 and the outlet guide roller 113, immediately below these rollers.

### (Fourth Embodiment)

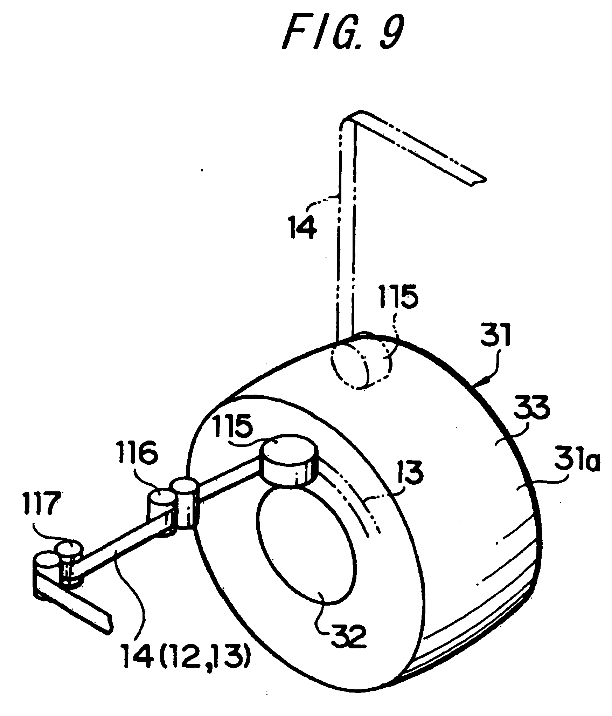

A fourth embodiment of the present invention is shown in Fig. 9, which is essentially same as the third embodiment described above, except that the rotational axis of the application roller 115 is arranged on a vertical plane (axial plane) that includes the rotational axis of the support body 31, and the rotational axis of the first guide roller 116 is arranged on a plane that is parallel to this vertical plane. Thus, the application roller 115, the first guide roller 116, the second guide roller 117, etc., are moved by the moving means two-dimensionally in these vertical planes, and driven into a parallel movement in the meridian direction along the outer surface 31 a of the support member 31. Also, the application roller 115 and the first and second guide rollers 116,117 are integrally turned by the turning means about a horizontal turning axis that is perpendicular to the vertical plane, so that he ribbon-like body 13 is helically wound by the application roller 105 onto the support member 31 multiple times, at the intersection line between the outer surface 31 a and the vertical plane that includes the rotational axis of the support member 31.

As a result, even if the winding position relative to the support member 31 moves in the meridian direction and the supplying direction of the ribbon-like body 13 gradually changes so that the ribbon-like body 13 is shifted in the axial direction of the support member 31, such an axial shifting can be absorbed by causing the narrow strip member 14 (ribbon-like body 13), which is stretched between the second guide roller 117 and the outlet guide roller 113 at least partly with an upright posture, to achieve a flexural deformation at such upright portion, without any noticeable problems.

### (Fifth Embodiment)

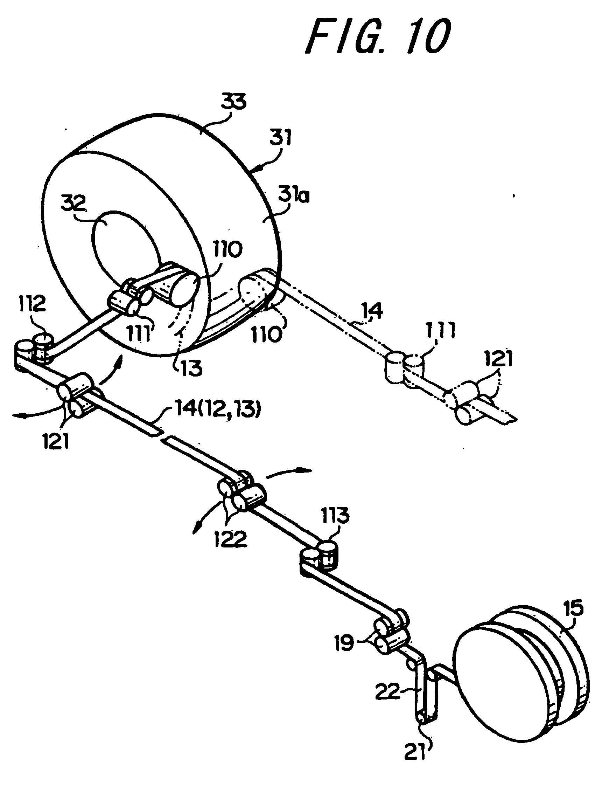

A fifth embodiment of the present invention is shown in Fig. 10, which is essentially same as the third embodiment described above, except that a pair of guide rollers 121 are supported by the support frame 51 at positions closer to the unwinding means 16 than the second guide rollers 112, so as to be rotatable about the rotational axes that are horizontal and parallel to the support member 31, and guide rollers 122 are supported by the stationary frame 11 at positions closer to the support member 31 than the outlet guide roller 113, so as to be rotatable about the rotational axes that are parallel to the guide rollers 121. These guide rollers 121, 122 can be swung in a horizontal plane about the second guide rollers 112 and the outlet guide roller 113.

In the third embodiment described above, there may be instances in which the narrow strip member 14 (ribbon-like body 13) stretched between the second guide roller 112 and the outlet guide roller 113 is moved downwards by its own weight. However, when horizontal guide rollers 121,122 are arranged between the second guide roller 112 and the outlet guide roller 113 as in the present embodiment, it is possible to effectively prevent such a downward movement of the narrow strip member 14 (ribbon-like body 13). Incidentally, the narrow strip member 14 may have an upright posture in its entire portion between the second guide roller 112 and the outlet guide roller 113, and a horizontal guide roller may be arranged in contact with the lower side of the narrow strip member 14, in order to support the narrow strip member 14 from the lower side by such a guide roller.

### (Sixth Embodiment)

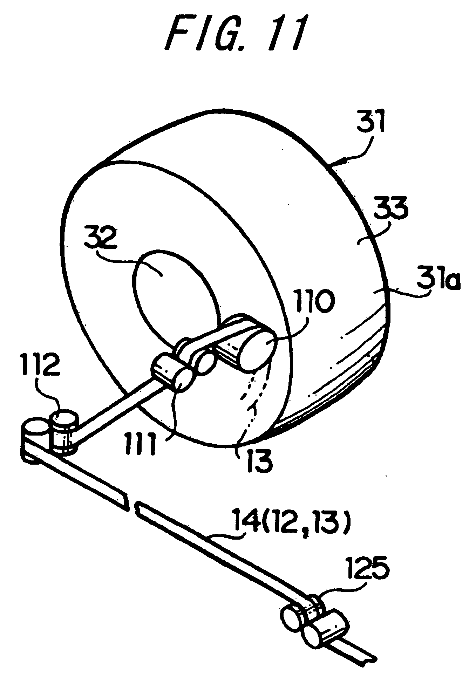

A sixth embodiment of the present invention is shown in Fig. 11, which is essentially same as the third embodiment described above, except that an outlet guide roller 125 having a horizontal rotational axis is arranged in place of the outlet guide roller 113 in the third embodiment. In this instance, the narrow strip member 14 (ribbon-like body 13) stretched between the second guide roller 112 and the outlet guide roller 125 has an upright posture in its region adjacent to the outlet guide roller 125. Thus, even if the winding position relative to the support member 31 moves in the meridian direction and the supplying direction of the ribbon-like body 13 gradually changes so that the ribbon-like body 13 is shifted in the axial direction of the support member 31, such an axial shifting can be absorbed by the flexural deformation of the narrow strip member 14 at such upright portion, without any noticeable problems.

In the embodiments of the present invention described above, the narrow strip member 14 (ribbon-like body 13) is hauled by the drive motor 58 and thereby unwound from the unwinding means 16. However, the drive motor 58 can be eliminated if a drive motor is connected to the reel 15 for positively driving the reel 15 to unwind the narrow strip member 14.

Furthermore, in the embodiments of the present invention described above, the first guide roller 57 and the application roller 76 are provided as separate elements. However, the first guide roller 57 may also function as the application roller. Also, in the embodiments of the present invention described above, the ribbon-like body 15 is stored as being wound on the reel in superimposition with the liner 12. However, if the ribbon-like body 13 has a sufficient strength, the ribbon-like body 13 alone may be wound and stored.

Moreover, in the embodiments of the present invention described above, the supply source is comprised of an unwinding means installed at an immovable position. However, the ribbon-like body may be supplied to the outer surface of the support member from a supply source in the form of an extruder, from which the ribbon-like body may be supplied either directly, or through a festoon, etc.

### INDUSTRIAL APPLICABILITY

The present invention is applicable to a technical field in which a ribbon-like body is supplied to the outer surface of a toroidal support member and helically wound thereon multiple times.

## Claims

1. A method for manufacturing an unvulcanized tire, wherein a ribbon-like body (13) is supplied from a supply source (16) to an outer surface of a toroidal support member (31) and helically wound thereon multiple times, said method comprising:
providing a first rotatable guide roller (57) as being arranged spaced from the support member (31), moving the first guide roller (57) by a moving means (60) to achieve parallel movement along the outer surface of the support member (31) in a meridian direction, and turning the first guide roller (57) by a turning means (64) so that a direction, in which the rotational axis of the first guide roller (57) extends, approaches a tangent at the outer surface of the support member (31);
providing a second guide roller (71) as being arranged on a straight line passing the first guide roller (57) and being perpendicular to the plane including a moving trajectory of the first guide roller (57), said second guide roller (71) having a rotational axis that extends in a width direction of the ribbon-like body (13) supplied from the supply source to the support member (31), and moving the second guide roller (71) by the moving means (60) so as to achieve parallel movement integrally with the first guide roller (57); and
during the parallel movement of the first and second guide rollers (57, 71), bringing the ribbon-like body (13) supplied from the supply source (16) into contact successively with the second and first guide rollers (57, 71), before it is supplied to the outer surface of the support member (31).

2. A method for manufacturing an unvulcanized tire, wherein a ribbon-like body (13) is supplied from a supply source (16) to an outer surface of a toroidal support member (31) and helically wound thereon multiple times, said method comprising:
providing a first rotatable guide roller (106) as being arranged spaced from the support member (31), moving the first guide roller (106) by a moving means (60) to achieve parallel movement along the outer surface of the support member (31) in a meridian direction, and turning the first guide roller (106) by a turning means (64) so that a direction, in which the rotational axis of the first guide roller (106) extends, approaches a tangent at the outer surface of the support member (31);
providing a second guide roller (107) as being arranged on a straight line perpendicular to the rotational axis of the first guide roller (106), on the side of the first guide roller (106) remote from the support member (31), said second guide roller (107) having a rotational axis that extends in a width direction of the ribbon-like body (13) supplied from the supply source (16) to the support member (31), and moving and turning the second guide roller (107) by the moving means (60) and the turning means (64) so as to achieve parallel movement and turning movement integrally with the first guide roller (106) and
during the parallel movement and the turning movement of the first and second guide rollers (106, 107), bringing the ribbon-like body (13), which has been supplied from the supply source (16), into contact successively with the second and first guide rollers (106, 107), before it is supplied to the outer surface of the support member (31).

3. The method for manufacturing an unvulcanized tire according to Claim 1 or 2, wherein the ribbon-like body (13) supplied to the outer surface of the support member (31) is wound out from an unwinding means (16) having an immovable installation position.

4. An apparatus for manufacturing an unvulcanized tire, wherein a ribbon-like body (13) is supplied from a supply source (16) to an outer surface of a toroidal support member (31) and helically wound thereon multiple times, said apparatus comprising:
a first rotatable guide roller (57) arranged spaced from the support member (31);
a moving means (60) for moving the first guide roller (57) to achieve parallel movement along the outer surface of the support member (31) in a meridian direction;
a turning means (64) for turning the first guide roller (57) during its parallel movement along the outer surface of the support member (31), so that a direction, in which the rotational axis of the first guide roller (57) extends, approaches a tangent at the outer surface of the support member (31); and
a second guide roller (71) arranged on a straight line passing the first guide roller (57) and being perpendicular to the plane including a moving trajectory of the first guide roller (57), said second guide roller (71) having a rotational axis that extends in a width direction of the ribbon-like body (13) supplied from the supply source (16) to the support member (31), said second guide roller (71) being adapted to be moved by the moving means (60) so as to achieve parallel movement integrally with the first guide roller (57);
said apparatus being operable so that the ribbon-like body (13) supplied from the supply source (16) is brought into contact successively with the second and first guide rollers (51,71), before it is supplied to the outer surface of the support member (31).

5. An apparatus for manufacturing an unvulcanized tire, wherein a ribbon-like body (13, 14) supplied from a supply source (16) to an outer surface of a toroidal support member (31) and helically wound thereon multiple times, said apparatus comprising:
a first rotatable guide roller (106) arranged spaced from the support member (31);
a moving means (60) for moving the first guide roller (106) to achieve parallel movement along the outer surface of the support member (31) in a meridian direction;
a turning means (64) for turning the first guide roller (106) during its parallel movement along the outer surface of the support member (31), so that a direction, in which the rotational axis of the first guide roller (106) extends, approaches a tangent at the outer surface of the support member (31); and
a second guide roller (107) arranged on a straight line perpendicular to the rotational axis of the first guide roller (106), on the side of the first guide roller (106) remote from the support member (31), said second guide roller (107) having a rotational axis that extends in a width direction of the ribbon-like body (13, 14) supplied from the supply source (16) to the support member (31), said second guide roller (107) being adapted to be moved and turned by the moving means (60) and the turning means (64) so as to achieve parallel movement and turning movement integrally with the first guide roller (106);
said apparatus being operable so that the ribbon-like body (13, 14), which has been supplied from the supply source (16), is brought into contact successively with the second and first guide rollers (106, 107), before it is supplied to the outer surface of the support member (31).

6. The apparatus for manufacturing an unvulcanized tire according to Claim 4 or 5, wherein the ribbon-like body (13, 14) is stormed as being wound in superimposition with a liner (12), the ribbon-like body (13, 14) and the liner (12) arc supplied toward the support member (31) as being superimposed with each other, the ribbon-like body (13, 14) is separated from the liner (12) immediately before it is wound to the support member (31), the separated ribbon-like body (13, 14) is wound to the support member (31), while the liner (12) is recovered.

7. The apparatus for manufacturing an unvulcanized tire according to Claim 4, wherein the ribbon-like body (13) between the first and second guide rollers (57, 71) has a widthwise center line passing a center region in a thickness direction of the ribbon-like body (13), said widthwise center line extending perpendicular to said plane and coinciding with the turning axis.

8. The apparatus for manufacturing an unvulcanized tire according to Claim 4 or 7, wherein said supply source (16) has an outlet portion provided with a guide roller (19) having a rotational axis, and an outlet guide roller (28) arranged on a straight line perpendicular to said rotational axis of the guide roller (19), so that the ribbon-like body (13) supplied from the supply source (16) is brought into contact with said guide roller (19) and then with said outlet guide roller (28), said outlet guide roller (28) and said second guide roller (71) being adapted to be swung by a tension of the ribbon-like body (13) between these rollers (19, 28) so as to be parallel with each other.

9. The apparatus for manufacturing an unvulcanized tire according to any one of Claims 5, wherein said second guide roller (112, 117) has a vertical rotational axis and said supply source (16) has an outlet portion provided with an outlet guide roller (113) having a rotational axis parallel to said second guide roller (71), on which the ribbon-like body (13, 14) wound from the supply source (16) travels in contact with each other.

10. The apparatus for manufacturing an unvulcanized tire according to any one of Claims 4 to 9, wherein said supply source (16) for supplying the ribbon-like body (13) to the outer surface of the support member comprises an unwinding means (16) having an immovable installation position.

## Patentansprüche

1. Verfahren zur Herstellung eines unvulkanisierten Reifens, wobei eine bandartige Karkasse (13) von einer Zuführungsquelle (16) zu einer Außenfläche eines ringförmigen Aufnahmeelementes (31) zugeführt und darauf mehrmals spiralförmig gewickelt wird, wobei das Verfahren die folgenden Schritte aufweist:
Bereitstellen einer ersten drehbaren Führungsrolle (57), die beabstandet vom Aufnahmeelement (31) angeordnet wird, wobei die erste Führungsrolle (57) mittels einer Bewegungseinrichtung (60) bewegt wird, um eine Parallelbewegung längs der Außenfläche des Aufnahmeelementes (31) in einer Meridianrichtung zu bewirken, und Wenden der ersten Führungsrolle (57) mittels einer Wendeeinrichtung (64), so dass sich eine Richtung, in der sich die Rotationsachse der ersten Führungsrolle (57) erstreckt, einer Tangente auf der Außenfläche des Aufnahmeelementes (31) nähert;
Bereitstellen einer zweiten Führungsrolle (71), die auf einer geraden Linie, die die erste Führungsrolle (57) passiert, und senkrecht zu der Ebene angeordnet ist, die eine Bewegungsbahn der ersten Führungsrolle (57) umfasst, wobei die zweite Führungsrolle (71) eine Rotationsachse aufweist, die sich in einer Breitenrichtung der bandartigen Karkasse (13) erstreckt, die von der Zuführungsquelle zum Aufnahmeelement (31) zugeführt wird, und wobei die zweite Führungsrolle (71) mittels der Bewegungseinrichtung (60) bewegt wird, um so eine Parallelbewegung zusammenhängend mit der ersten Führungsrolle (57) zu bewirken; und,
während der Parallelbewegung der ersten und zweiten Führungsrolle (57, 71), Bewirken, dass die bandartige Karkasse (13), die von der Zuführungsquelle (16) zugeführt wird, nacheinander mit der zweiten und ersten Führungsrolle (57, 71) in Kontakt kommt, bevor sie zur Außenfläche des Aufnahmeelementes (31) zugeführt wird.

2. Verfahren zur Herstellung eines unvulkanisierten Reifens, wobei eine bandartige Karkasse (13) von einer Zuführungsquelle (16) zu einer Außenfläche eines ringförmigen Aufnahmeelementes (31) zugeführt und darauf mehrmals spiralförmig gewickelt wird, wobei das Verfahren die folgenden Schritte aufweist:
Bereitstellen einer ersten drehbaren Führungsrolle (106), die beabstandet vom Aufnahmeelement (31) angeordnet wird, wobei die erste Führungsrolle (106) mittels einer Bewegungseinrichtung (60) bewegt wird, um eine Parallelbewegung längs der Außenfläche des Aufnahmeelementes (31) in einer Meridianrichtung zu bewirken, und Wenden der ersten Führungsrolle (106) mittels einer Wendeeinrichtung (64), so dass sich eine Richtung, in der sich die Rotationsachse der ersten Führungsrolle (106) erstreckt, einer Tangente auf der Außenfläche des Aufnahmeelementes (31) nähert;
Bereitstellen einer zweiten Führungsrolle (107), die auf einer geraden Linie senkrecht zur Rotationsachse der ersten Führungsrolle (106) auf der Seite der ersten Führungsrolle (106), entfernt vom Aufnahmeelement (31), angeordnet ist, wobei die zweite Führungsrolle (107) eine Rotationsachse aufweist, die sich in einer Breitenrichtung der bandartigen Karkasse (13) erstreckt, die von der Zuführungsquelle (16) zum Aufnahmeelement (31) zugeführt wird, und wobei die zweite Führungsrolle (107) mittels der Bewegungseinrichtung (60) bewegt und mittels der Wendeeinrichtung (64) gewendet wird, um so eine Parallelbewegung und Wendebewegung zusammenhängend mit der ersten Führungsrolle (106) zu bewirken; und,
während der Parallelbewegung und der Wendebewegung der ersten und zweiten Führungsrolle (106, 107), Bewirken, dass die bandartige Karkasse (13), die von der Zuführungsquelle (16) zugeführt wird, nacheinander mit der zweiten und ersten Führungsrolle (106, 107) in Kontakt kommt, bevor sie zur Außenfläche des Aufnahmeelementes (31) zugeführt wird.

3. Verfahren zur Herstellung eines unvulkanisierten Reifens nach Anspruch 1 oder 2, bei dem die bandartige Karkasse (13), die zur Außenfläche des Aufnahmeelementes (31) zugeführt wird, von einer Abwickeleinrichtung (16) mit einer unbeweglichen Installationsposition abgewickelt wird.

4. Vorrichtung zur Herstellung eines unvulkanisierten Reifens, wobei eine bandartige Karkasse (13) von einer Zuführungsquelle (16) zu einer Außenfläche eines ringförmigen Aufnahmeelementes (31) zugeführt und darauf mehrmals spiralförmig gewickelt wird, wobei die Vorrichtung aufweist:
eine erste drehbare Führungsrolle (57), die beabstandet vom Aufnahmeelement (31) angeordnet ist;
eine Bewegungseinrichtung (60) für das Bewegen der ersten Führungsrolle (57), um eine Parallelbewegung längs der Außenfläche des Aufnahmeelementes (31) in einer Meridianrichtung zu bewirken;
eine Wendeeinrichtung (64) für das Wenden der ersten Führungsrolle (57) während ihrer Parallelbewegung längs der Außenfläche des Aufnahmeelementes (31), so dass sich eine Richtung, in der sich die Rotationsachse der ersten Führungsrolle (57) erstreckt, einer Tangente auf der Außenfläche des Aufnahmeelementes (31) nähert; und
eine zweite Führungsrolle (71), die auf einer geraden Linie, die die erste Führungsrolle (57) passiert, und senkrecht zu der Ebene angeordnet ist, die eine Bewegungsbahn der ersten Führungsrolle (57) umfasst, wobei die zweite Führungsrolle (71) eine Rotationsachse aufweist, die sich in einer Breitenrichtung der bandartigen Karkasse (13) erstreckt, die von der Zuführungsquelle (16) zum Aufnahmeelement (31) zugeführt wird, wobei die zweite Führungsrolle (71) so ausgebildet ist, dass mittels der Bewegungseinrichtung (60) bewegt wird, um so eine Parallelbewegung zusammenhängend mit der ersten Führungsrolle (57) zu bewirken;
wobei die Vorrichtung funktionsfähig ist, damit die bandartige Karkasse (13), die von der Zuführungsquelle (16) zugeführt wird, nacheinander mit der zweiten und ersten Führungsrolle (57, 71) in Kontakt kommt, bevor sie zur Außenfläche des Aufnahmeelementes (31) zugeführt wird.

5. Vorrichtung zur Herstellung eines unvulkanisierten Reifens, wobei eine bandartige Karkasse (13, 14) von einer Zuführungsquelle (16) zu einer Außenfläche eines ringförmigen Aufnahmeelementes (31) zugeführt und darauf mehrmals spiralförmig gewickelt wird, wobei die Vorrichtung aufweist:
eine erste drehbare Führungsrolle (106), die beabstandet vom Aufnahmeelement (31) angeordnet ist;
eine Bewegungseinrichtung (60) für das Bewegen der ersten Führungsrolle (106), um eine Parallelbewegung längs der Außenfläche des Aufnahmeelementes (31) in einer Meridianrichtung zu bewirken;
eine Wendeeinrichtung (64) für das Wenden der ersten Führungsrolle (106) während ihrer Parallelbewegung längs der Außenfläche des Aufnahmeelementes (31), so dass sich eine Richtung, in der sich die Rotationsachse der ersten Führungsrolle (106) erstreckt, einer Tangente auf der Außenfläche des Aufnahmeelementes (31) nähert; und
eine zweite Führungsrolle (107), die auf einer geraden Linie senkrecht zur Rotationsachse der ersten Führungsrolle (106) auf der Seite der ersten Führungsrolle (106), entfernt vom Aufnahmeelement (31) angeordnet ist, wobei die zweite Führungsrolle (107) eine Rotationsachse aufweist, die sich in einer Breitenrichtung der bandartigen Karkasse (13, 14) erstreckt, die von der Zuführungsquelle (16) zum Aufnahmeelement (31) zugeführt wird, wobei die zweite Führungsrolle (107) so ausgebildet ist, dass sie mittels der Bewegungseinrichtung (60) bewegt und mittels der Wendeeinrichtung (64) gewendet wird, um so eine Parallelbewegung und eine Wendebewegung zusammenhängend mit der ersten Führungsrolle (106) zu bewirken;
wobei die Vorrichtung funktionsfähig ist, damit die bandartige Karkasse (13, 14), die von der Zuführungsquelle (16) zugeführt wird, nacheinander mit der zweiten und ersten Führungsrolle (106, 107) in Kontakt kommt, bevor sie zur Außenfläche des Aufnahmeelementes (31) zugeführt wird.

6. Vorrichtung zur Herstellung eines unvulkanisierten Reifens nach Anspruch 4 oder 5, bei der die bandartige Karkasse (13, 14) abgelegt wird, während sie in Überlagerung mit einem Liner (12) gewickelt wird, wobei die bandartige Karkasse (13, 14) und der Liner (12) in Richtung des Aufnahmeelementes (31) miteinander überlagert zugeführt werden, wobei die bandartige Karkasse (13, 14) vom Liner (12) unmittelbar vor dem Aufwickeln auf das Aufnahmeelement (31) getrennt wird, wobei die getrennte bandartige Karkasse (13, 14) auf das Aufnahmeelement (31) gewickelt wird, während der Liner (12) zurückgewonnen wird.

7. Vorrichtung zur Herstellung eines unvulkanisierten Reifens nach Anspruch 4, bei der die bandartige Karkasse (13) zwischen der ersten und zweiten Führungsrolle (57, 71) eine Mittellinie in der Breitenrichtung aufweist, die einen mittleren Bereich in einer Dickenrichtung der bandartigen Karkasse (13) passiert, wobei sich die Mittellinie in der Breitenrichtung senkrecht zur Ebene erstreckt und mit der Wendeachse übereinstimmt.

8. Vorrichtung zur Herstellung eines unvulkanisierten Reifens nach Anspruch 4 oder 7, bei der die Zuführungsquelle (16) einen Austrittsabschnitt aufweist, der mit einer Führungsrolle (19) mit einer Rotationsachse und einer Austrittsführungsrolle (28) versehen ist, die auf einer geraden Linie senkrecht zur Rotationsachse der Führungsrolle (19) angeordnet ist, damit die bandartige Karkasse (13), die von der Zuführungsquelle (16) zugeführt wird, mit der Führungsrolle (19) und danach mit der Austrittsführungsrolle (28) in Kontakt gebracht wird, wobei die Austrittsführungsrolle (28) und die zweite Führungsrolle (71) so ausgebildet sind, dass sie mittels einer Zugspannung der bandartigen Karkasse (13) zwischen diesen Rollen (19, 28) geschwenkt werden, damit sie parallel zueinander sind.

9. Vorrichtung zur Herstellung eines unvulkanisierten Reifens nach Anspruch 5, bei der die zweite Führungsrolle (112, 117) eine vertikale Rotationsachse aufweist, und wobei die Zuführungsquelle (16) einen Austrittsabschnitt aufweist, der mit einer Austrittsführungsrolle (113) mit einer Rotationsachse parallel zur zweiten Führungsrolle (71) versehen ist, auf der sich die bandartige Karkasse (13, 14), die von der Zuführungsquelle (16) abgewickelt wird, in Kontakt miteinander bewegt.

10. Vorrichtung zur Herstellung eines unvulkanisierten Reifens nach einem der Ansprüche 4 bis 9, bei der die Zuführungsquelle (16) für das Zuführen der bandartigen Karkasse (13) zur Außenfläche des Aufnahmeelementes eine Abwickeleinrichtung (16) mit einer unbeweglichen Installationsposition aufweist.

## Revendications

1. Procédé de fabrication d'un bandage pneumatique non vulcanisé, dans lequel un corps en forme de ruban (13) est amené à partir d'une source d'alimentation (16) vers une surface externe d'un élément de support toroïdal (31) et enroulé à de multiples reprises de manière hélicoïdale sur celui-ci, ledit procédé comprenant les étapes ci-dessous :
fourniture d'un premier rouleau de guidage rotatif (57), agencé de manière espacée de l'élément de support (31), déplacement du premier rouleau de guidage (57) par un moyen de déplacement (60) pour entraîner un déplacement parallèle le long de la surface externe de l'élément de support (31), dans une direction méridienne, et rotation du premier rouleau de guidage (57) par un moyen de rotation (64), de sorte qu'une direction, dans laquelle s'étend l'axe de rotation du premier rouleau de guidage (57), se rapproche d'une tangente au niveau de la surface externe de l'élément de support (31) ;
fourniture d'un deuxième rouleau de guidage (71), agencé sur une ligne droite passant à travers le premier rouleau de guidage (57), et perpendiculaire au plan englobant une trajectoire du déplacement du premier rouleau de guidage (57), ledit deuxième rouleau de guidage (71) comportant un axe de rotation s'étendant dans une direction de la largeur du corps en forme de ruban (13) amené à partir de la source d'alimentation vers l'élément de support (31), et déplacement du deuxième rouleau de guidage (71) par le moyen de déplacement (60), de sorte à entraîner un déplacement parallèle, d'une seule pièce avec le premier rouleau de guidage (57) ; et
au cours du déplacement parallèle des premier et deuxième rouleaux de guidage (57, 71), mise en contact successive du corps en forme de ruban (13), amené à partir de la source d'alimentation (16), avec les deuxième et premier rouleaux de guidage (57, 71), avant son amenée vers la surface externe de l'élément de support (31).

2. Procédé de fabrication d'un bandage pneumatique non vulcanisé, dans lequel un corps en forme de ruban (13) est amené à partir d'une source d'alimentation (16) vers une surface externe de l'élément de support toroïdal (31) et enroulé à de multiples reprises de manière hélicoïdale sur celui-ci, ledit procédé comprenant les étapes ci-dessous :
fourniture d'un premier rouleau de guidage rotatif (106), agencé de manière espacée de l'élément de support (31), déplacement du premier rouleau de guidage (106) par un moyen de déplacement (60) pour entraîner un déplacement parallèle le long de la surface externe de l'élément de support (31), dans une direction méridienne, et rotation du premier rouleau de guidage (106) par un moyen de rotation (64), de sorte qu'une direction, dans laquelle s'étend l'axe de rotation du premier rouleau de guidage (106), se rapproche d'une tangente au niveau de la surface externe de l'élément de support (31) ;
fourniture d'un deuxième rouleau de guidage (107), agencé sur une ligne droite perpendiculaire à l'axe de rotation du premier rouleau de guidage (106), sur le côté du premier rouleau de guidage (106) éloigné de l'élément de support (31), ledit deuxième rouleau de guidage (107) comportant un axe de rotation s'étendant dans une direction de la largeur du corps en forme de ruban (13), amené à partir de la source d'alimentation (16) vers l'élément de support (31), et déplacement et rotation du deuxième rouleau de guidage (107) par le moyen de déplacement (60) et le moyen de rotation (64), de sorte à entraîner un déplacement parallèle et un déplacement rotatif d'une seule pièce avec le premier rouleau de guidage (106) ; et
au cours du déplacement parallèle et du déplacement rotatif des premier et deuxième rouleaux de guidage (106, 107), mise en contact successive du corps en forme de ruban (13), amené à partir de la source d'alimentation (16), avec les deuxième et premier rouleaux de guidage (106, 107), avant son amenée vers la surface externe de l'élément de support (31).

3. Procédé de fabrication d'un bandage pneumatique non vulcanisé selon les revendications 1 ou 2, dans lequel le corps en forme de ruban (13), amené vers la surface externe de l'élément de support (31), est déroulé d'un moyen de déroulement (16) ayant une position d'installation fixe.

4. Appareil de fabrication d'un bandage pneumatique non vulcanisé, dans lequel un corps en forme de ruban (13) est amené à partir d'une source d'alimentation (16) vers une surface externe d'un élément de support toroïdal (31) et enroulé à de multiples reprises de manière hélicoïdale sur celui-ci, ledit appareil comprenant :
un premier rouleau de guidage (57), agencé de manière espacée de l'élément de support (31) ;
un moyen de déplacement (60) pour déplacer le premier rouleau de guidage (57), afin d'entraîner un déplacement parallèle le long de la surface externe de l'élément de support (31), dans une direction méridienne ;
un moyen de rotation (64) pour faire tourner le premier rouleau de guidage (57) au cours de son déplacement parallèle le long de la surface externe de l'élément de support (31), de sorte qu'une direction, dans laquelle s'étend l'axe de rotation du premier rouleau de guidage (57), se rapproche d'une tangent au niveau de la surface externe de l'élément de support (31) ; et
un deuxième rouleau de guidage (71), agencé sur une ligne droite passant à travers le premier rouleau de guidage (57), et perpendiculaire au plan englobant une trajectoire du déplacement du premier rouleau de guidage (57), ledit deuxième rouleau de guidage (71) comportant un axe de rotation s'étendant dans une direction de la largeur du corps en forme de ruban (13) amené à partir de la source d'alimentation vers l'élément de support (31), le deuxième rouleau de guidage (71) étant adapté pour être déplacé par le moyen de déplacement (60), de sorte à entraîner un déplacement parallèle, d'une seule pièce avec le premier rouleau de guidage (57) ;
ledit appareil pouvant être actionné de sorte que le corps en forme de ruban (13), amené à partir de la source d'alimentation (16), est mis successivement en contact avec les deuxième et premier rouleaux de guidage (57, 71), avant son amenée vers la surface externe de l'élément de support (31).

5. Appareil de fabrication d'un bandage pneumatique non vulcanisé, dans lequel un corps en forme de ruban (13, 14) est amené à partir d'une source d'alimentation (16) vers une surface externe d'un élément de support toroïdal (31) et enroulé à de multiples reprises de manière hélicoïdale sur celui-ci, ledit appareil comprenant :
un premier rouleau de guidage rotatif (106), agencé de manière espacée de l'élément de support (31) ;
un moyen de déplacement (60) pour déplacer le premier rouleau de guidage (106), afin d'entraîner un déplacement parallèle le long de la surface externe de l'élément de support (31), dans une direction méridienne ;
un moyen de rotation (64) pour faire tourner le premier rouleau de guidage (106) au cours de son déplacement parallèle le long de la surface externe de l'élément de support (31), de sorte qu'une direction, dans laquelle s'étend l'axe de rotation du premier rouleau de guidage (106), se rapproche d'une tangent au niveau de la surface externe de l'élément de support (31) ; et
un deuxième rouleau de guidage (107), agencé sur une ligne droite perpendiculaire à l'axe de rotation du premier rouleau de guidage (106), sur le côté du premier rouleau de guidage (106) éloigné de l'élément de support (31), ledit deuxième rouleau de guidage (107) comportant un axe de rotation s'étendant dans une direction de la largeur du corps en forme de ruban (13, 14) amené à partir de la source d'alimentation (16) vers l'élément de support (31), le deuxième rouleau de guidage (107) étant adapté pour être déplacé et tourné par le moyen de déplacement (60) et le moyen de rotation (64), de sorte à entraîner un déplacement parallèle et un déplacement rotatif, d'une seule pièce avec le premier rouleau de guidage (106) ;
ledit appareil pouvant être actionné de sorte que le corps en forme de ruban (13, 14), amené à partir de la source d'alimentation (16), est mis successivement en contact avec les deuxième et premier rouleaux de guidage (106, 107), avant son amenée vers la surface externe de l'élément de support (31).

6. Appareil de fabrication d'un bandage pneumatique non vulcanisé selon les revendications 4 ou 5, dans lequel le corps en forme de ruban (13, 14) est stocké dans l'état enroulé en superposition avec un calandrage (12), le corps en forme de ruban (13, 14) et le calandrage (12) étant amenés vers l'élément de support (31) dans un état superposé l'un à l'autre, le corps en forme de ruban (13, 14) étant séparé du calandrage (12) immédiatement avant son enroulement sur l'élément de support (31), le corps en forme de ruban séparé (13, 14) étant enroulé sur l'élément de support (31), le calandrage (12) étant récupéré.

7. Appareil de fabrication d'un bandage pneumatique non vulcanisé selon la revendication 4, dans lequel le corps en forme de ruban (13) entre les premier et deuxième rouleaux de guidage (57, 71) comporte une ligne médiane dans le sens de la largeur, passant à travers une région centrale dans une direction de l'épaisseur du corps en forme de ruban (13), ladite ligne médiane dans le sens de la largeur s'étendant de manière perpendiculaire audit plan et coïncidant avec l'axe de rotation.

8. Appareil de fabrication d'un bandage pneumatique non vulcanisé selon les revendications 4 ou 7, dans lequel ladite source d'alimentation (16) comporte une partie de sortie comportant un rouleau de guidage (19) ayant un axe de rotation, et un rouleau de guidage de sortie (28) agencé sur une ligne droite perpendiculaire audit axe de rotation du rouleau de guidage (19), de sorte que le corps en forme de ruban (13) amené à partir de la source d'alimentation (16) est mis en contact avec ledit rouleau de guidage (19) et ensuite avec ledit rouleau de guidage de sortie (28), ledit rouleau de guidage de sortie (28) et ledit deuxième rouleau de guidage (71) étant adaptés pour être pivotés par une tension du corps en forme de ruban (13) entre ces rouleaux (19, 28), de sorte à être parallèles l'un à l'autre.

9. Appareil de fabrication d'un bandage pneumatique non vulcanisé selon la revendication 5, dans lequel ledit deuxième rouleau de guidage (112, 117) comporte un axe de rotation vertical, ladite source d'alimentation (16) comportant une partie de sortie comportant un rouleau de guidage de sortie (113) ayant un axe de rotation parallèle audit deuxième rouleau de guidage (71), sur lequel le corps en forme de ruban (13, 14), déroulé de la source d'alimentation (16) se déplace pour établir un contact mutuel.

10. Appareil de fabrication d'un bandage pneumatique non vulcanisé selon l'une quelconque des revendications 4 à 9, dans lequel ladite source d'alimentation (16), destinée à amener le corps en forme de ruban (13) vers la surface externe de l'élément de support, comprend un moyen de déroulement (16) ayant une position d'installation fixe.
